(19) Europäisches Patentamt / European Patent Office / Office européen des brevets

(11) **EP 3 098 728 A1**

(12) **EUROPEAN PATENT APPLICATION**

(43) Date of publication:
**30.11.2016 Bulletin 2016/48**

(51) Int Cl.:
***G06F 17/30*** *(2006.01)*

(21) Application number: **15305829.2**

(22) Date of filing: **29.05.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Thomson Licensing**
  **92130 Issy-les-Moulineaux (FR)**
• **INRIA - Institut National de Recherche en Informatique et en Automatique**
  **78150 Le Chesnay (FR)**

(72) Inventors:
• **Dupuy, Christophe**
  **35576 Cesson-Sévigné (FR)**
• **Diot, Christophe**
  **92443 Issy-Les-Moulineaux (FR)**
• **Bach, Francis**
  **35042 Rennes Cedex (FR)**

(74) Representative: **Huchet, Anne et al**
**TECHNICOLOR**
**1-5, rue Jeanne d'Arc**
**92130 Issy-les-Moulineaux (FR)**

(54) **METHOD AND APPARATUS FOR CREATING RECOMMENDATION LISTS OF MEDIA ASSETS**

(57) A recommendation system uses text reviews of media assets to generate lists of those media assets most similar to a first media asset. The system concatenates text reviews of the same media assets into distinct documents and weights the words of the document according to the number of reviews in the document. A latent Dirichlet allocation is used to extract profiles from the aggregated documents which are then used to generate a similarity measure relative to the first media asset.

Figure 1

**Description**

TECHNICAL FIELD

The present principles relate generally to the field of topic models, specifically applied to the problem of generating recommendation lists.

BACKGROUND

Recent advancements in application of topic models to text reviews have allowed wide generation of recommendation lists. The main goal of topic models is to extract latent topics from a corpus of text documents. A review is a set of words written by a user about one media asset, for example a movie. The words comprising the review can be useful for generating recommendations, as in the movie example where words such as "action", "horror", or "comedy" are very relevant. However, these words are often mixed with irrelevant words, sometimes known as "stop words." It is very tedious to extract only relevant words in the topics and enforce consistency.

SUMMARY

These and other drawbacks and disadvantages of the prior art are addressed by various described embodiments, which are directed to methods and apparatus for application of topic models to generation of recommendation lists.
According to one general aspect, a method is provided. The method comprises concatenating, in each of a plurality of respective documents, a plurality of text reviews of a plurality of media assets. The method further comprises reducing the bias of each of the documents by weighting the documents according to the number of reviews comprising each document. The method further comprises performing latent Dirichlet allocation on the weighted documents to extract profiles of the respective media assets, and further comprises creating recommendation lists of media assets, based on the extracted profiles.
According to another general aspect, an apparatus is provided. The apparatus comprises a first processor that concatenates in each of a plurality of respective documents, a plurality of text reviews of a plurality of media assets. The apparatus further comprises multipliers that reduce bias of each said document by weighting the documents according to the number of reviews comprising that document, and further comprises a second processor to perform latent Dirichlet allocation on said weighted documents to extract profiles of said respective media assets. The apparatus further comprises a third processor that creates recommendation lists of media assets, based on said extracted profiles.
The details of one or more implementations are set forth in the accompanying drawings and the description below. Even if described in one particular manner, it should be clear that implementations can be configured or embodied in various manners. For example, an implementation can be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

BRIEF DESCRIPTION OF THE DRAWINGS

The present principles can be better understood in accordance with the following exemplary figures, in which:

Figure 1 shows one embodiment of a method under the present principles.
Figure 2 shows one embodiment of an apparatus under the present principles.

DETAILED DESCRIPTION

Ratings of items such as movies can be used to extract profiles of the items using matrix factorization techniques. One can then compare movies given their ratings profiles. However, ratings do not convey information about the different features of a movie, such as genre, actors, director, for example. For any given movie, it is difficult to extract similar type movies from ratings.
Another method to extract profiles is from text reviews. Latent Dirichlet Allocation (LDA) is a method of natural language processing that uses a probabilistic model to infer hidden topics given a text corpus. The LDA method enables words to be explained by inferred topics to explain similarities between the different parts. Using the principles described herein, movie profiles can be extracted from text reviews. A corpus is a list of documents, and a document is a list of words. In an original corpus, each document is a review related to a user and a movie. A topic is a discrete distribution over words of the vocabulary. Each document of a text corpus can be represented as topic probabilities. In a text document, for example, LDA models each document as a number of topics and assumes words in the document are from one or more of the topics. LDA assumes that each word $w^d$ of the $d^{th}$ document is generated as follows:

- Choose $\theta^d \sim$ Dirichlet($\alpha$)

- For each word $w_n^d \in \mathbf{w}^d$:

  - Choose a topic $z_n^d \sim$ Multinomial($\theta^d$)

  - Choose a word $w_n^d \sim$ Multinomial $\left(\phi^{z_n^d}\right)$

If LDA is performed on a corpus where one document is one movie review, the topics extracted will be very noisy. Indeed, in all the reviews, relevant words coexist with noisy words. As a result, top words of topics are polluted by noisy words. The effect of these noisy words can be reduced by aggregating reviews. In the present method, all the reviews related to one movie are aggregated into one document.

Aggregating reviews in LDA can be done by constraining the topic document distribution $\theta$ to be the same for all the reviews related to the same movie. It is equivalent to considering a new corpus where each document is the concatenation of all the reviews related to a single movie. As a result, the vocabulary of each document is more consistent. As reviews of the same content share a common vocabulary, each document of this corpus brings out words associated with the content and lowers the influence of noisy words in the topics. With this new corpus, the extracted topics are more consistent.

However, the documents are now strongly unbalanced as popular movies may have been reviewed several hundreds of times while other movies may have significantly less reviews. As the top words of the topics tend to be recurring words in the documents, topics and topic-document distributions are then mainly representative of the most popular movies. This is one reason why some recommendation systems tend to suggest the most popularly reviewed movies to a user, because so many viewers have evaluated these movies. This causes a bias in the recommendation system that needs to be corrected if a recommendation system should consider all movies in a balanced way in generating suggestions. As recommender systems aim at suggesting new and diverse contents to users, correcting this bias is an important issue.

The present method, however, weights the number of occurrences of each word in each document depending on the number of reviews per movie. The result is a balanced corpus between very popular movies and the least reviewed movies.

In order to balance the influence of all the movies in the topics, the described embodiments weight the documents with the number of reviews per movies. For each movie $m$, let $N_m$ denote the number of reviews of $m$. As explained above, the reviews of $m$ are concatenated or aggregated into one document $d_m$. Document $d_m$ may be seen as a vector of word counts over the vocabulary $V = \{w_1, \ldots, w_V\}$, where $d_m[v]$ represents the number of occurrences of the word $w_v$ in the reviews of m. We then reweight the document $d_m$ as follows. For each word $v \in \{1,\ldots, V\}$:

$$\widehat{d}_m[v] \leftarrow \frac{d_m[v]}{\sqrt{N_m}}$$

This transformation has the effect of reducing the impact of the most popular movies in the corpus. The extracted topics bring out a richer vocabulary, less centered around few movies. This leads to a more diverse recommendation.

Latent Dirichlet Allocation (LDA) is then used to extract movie profiles from this new corpus. A similarity can be computed between movies, which leads to a much more diverse recommendation lists than lists obtained with the original corpus of reviews.

Given a movie $m$, we want to compute a list of movies similar to $m$. For any other movie with profile $\theta$, the similarity can be computed using the Kullback-Leibler (KL) divergence, for example, as follows:

$$KL(\theta^m \| \theta) = \sum_{k=0}^{K} \theta_k^m \log \frac{\theta_k^m}{\theta_k}$$

where $K$ is the number of topics. Ordered similarity lists computed with LDA and the normalized version are presented in the tables comprising Table 1.

Table 2 shows a comparison of topics, specifically the first nine topics extracted with LDA implemented in three ways, and K=64 topics. LDA, 1 doc=1 review is LDA run on a corpus where each document contains only a single review. LDA, 1 doc = 1 movie is LDA run on a corpus where each document is the concatenation of the reviews of a single movie. LDA, 1 doc = 1 movie normalized is the LDA method implemented with the weighting principles herein described.

The topics are ordered by importance $\hat{\theta}_k = \frac{1}{D} \sum \theta_k^d$.

One advantage of the described weighting method is that the features of each movie are inferred automatically, without any supervision. This method can be used to display a more precise and diverse list of similar movies.

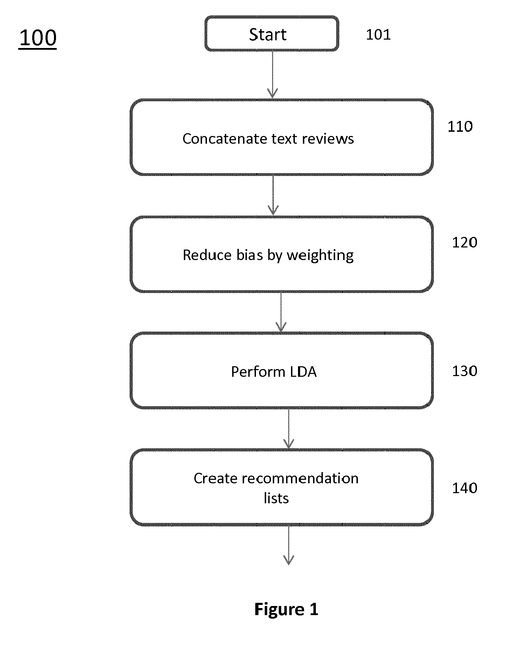

Figure 1 shows one embodiment of a method for creating recommendation lists under the present principles. The method commences in Start block 101 and control proceeds to block 110 for concatenating text reviews of a plurality media assets into respective documents, each respective of a particular media asset. Control then proceeds to block 120 for reducing the bias of the documents by weighting the documents according to the number of reviews comprising each of the documents. Control then proceeds to block 130 for performing latent Dirichlet allocation on the weighted documents to extract profiles of the respective media assets. Control then proceeds to block 140 for creating recommendation lists of media assets, based on the extracted profiles. The creation of recommendation lists can be based on the Kullback-Leibler divergence measure, for example.

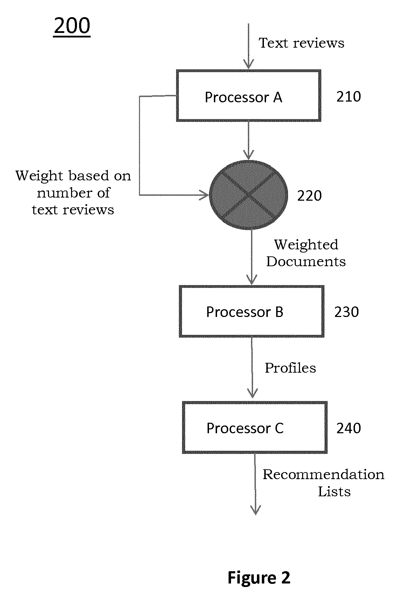

Figure 2 shows one embodiment of an apparatus for creating recommendation lists under the present principles. The apparatus comprises a first processor Processor A 210 that concatenates in each of a plurality of respective documents, a plurality of text reviews of a plurality of media assets. Processor A 210 takes as input text reviews of media assets. Processor A 210 has a first output that represents weighting factors for each document that comprises text reviews of a particular media asset, which is in signal connectivity of a first input to multipliers 220. A second output of Processor A 210 is in signal connectivity with a second input to multipliers 220, and represents the documents comprising concatenated text reviews of respective media assets. The multipliers 220 reduce the bias of each of the documents by weighting the documents according to the number of reviews comprising each of the documents. The apparatus further comprises a second processor Processor B 230, whose input is in signal connectivity with the output of multipliers 220, and which performs latent Dirichlet allocation on the weighted documents to extract profiles of the respective media assets. The output of Processor B 230 is in signal connectivity with the input of Processor C 240 that creates recommendation lists of media assets, based on the extracted profiles.

The processors in any of the described embodiments can be implemented using distinct processors, integrated processors, or some combination of integrated and distinct processors. One or all of the processors can be implemented as part of other circuitry as well.

**Table 1**

| Die Hard (1988) | | |
|---|---|---|
| # | LDA | Normalized LDA |
| 1 | Die Hard 2 (1990) | Speed 2: Cruise Control (1997) |
| 2 | Live Free or Die Hard (2007) | The Hurt Locker (2008) |
| 3 | A Good Day to Die Hard (2013) | The Transporter (2002) |
| 4 | Die Hard: With a Vengeance (1995) | Live Free or Die Hard (2007) |
| 5 | 12 Rounds (2009) | Marathon Man (1976) |
| 6 | House of Flying Daggers (2004) | The Last Stand (2013) |
| 7 | Under Siege 2: Dark Territory (1995) | Jack Reacher (2012) |
| 8 | Air Force One (1997) | The World Is Not Enough (1999) |
| 9 | Hostage (2005) | Lethal Weapon (1987) |
| 10 | Con Air (1997) | RoboCop 2 (1990) |
| Shrek (2001) | | |
| # | LDA | Normalized LDA |
| 1 | Shrek the Third (2007) | Toy Story 2 (1999) |
| 2 | Doctor Dolittle (1998) | Hoodwinked! (2005) |
| 3 | Shrek 2 (2004) | Flushed Away (2006) |
| 4 | Bolt (2008) | Tangled (2010) |
| 5 | Scooby-Doo (2002) | Toy Story 3 (2010) |
| 6 | Hoodwinked! (2005) | Shrek the Third (2007) |
| 7 | Igor (2008) | Charlie and the Chocolate Factory (2005) |

(continued)

| Shrek (2001) | | |
|---|---|---|
| # | LDA | Normalized LDA |
| 8 | Hotel Transylvania (2012) | Doctor Dolittle (1998) |
| 9 | Bee Movie (2007) | Blast from the Past (1999) |
| 10 | Despicable Me 2 (2013) | Cars (2006) |

| Star Wars: Episode I - The Phantom Menace (1999) | | |
|---|---|---|
| # | LDA | Normalized LDA |
| 1 | Star Wars: Episode III - Revenge of the Sith (2005) | Star Wars: Episode III - Revenge of the Sith (2005) |
| 2 | Star Wars: Episode II - Attack of the Clones (2002) | Avatar (2009) |
| 3 | Star Wars: Episode VI - Return of the Jedi (1983) | 2001: A Space Odyssey (1968) |
| 4 | Star Wars: Episode V - The Empire Strikes Back (1980) | Gravity (TV Series 2010-) |
| 5 | Star Wars: The Clone Wars (2008) | Star Wars: Episode IV - A New Hope (1977) |
| 6 | Star Wars: Episode IV - A New Hope (1977) | Star Wars: Episode II - Attack of the Clones (2002) |
| 7 | Krull (1983) | District 9 (2009) |
| 8 | The Island (2005) | Blade Runner (1982) |
| 9 | Stargate (1994) | Close Encounters of the Third Kind (1977) |
| 10 | Jumper (2008) | V for Vendetta (2005) |

| Star Wars: Episode II - Attack of the Clones (2002) | | |
|---|---|---|
| # | LDA | Normalized LDA |
| 1 | Star Wars: Episode III - Revenge of the Sith (2005) | Star Wars: Episode III - Revenge of the Sith (2005) |
| 2 | Star Wars: Episode I - The Phantom Menace (1999) | Blade Runner (1982) |
| 3 | Star Wars: Episode IV - A New Hope (1977) | Avatar (2009) |
| 4 | Star Wars: Episode V - The Empire Strikes Back (1980) | Prometheus (2012) |
| 5 | Star Wars: Episode VI - Return of the Jedi (1983) | Gravity (TV Series 2010-) |
| 6 | Star Wars: The Clone Wars (2008) | Indiana Jones and the Kingdom of the Crystal Skull (2008) |
| 7 | Krull (1983) | Waterworld (1995) |
| 8 | The Island (2005) | TRON: Legacy (2010) |
| 9 | Willow (1988) | The Matrix Reloaded (2003) |
| 10 | Jumper (2008) | Star Wars: Episode IV - A New Hope (1977) |

| Star Wars: Episode III - Revenge of the Sith (2005) | | |
|---|---|---|
| # | LDA | Normalized LDA |
| 1 | Star Wars: Episode VI - Return of the Jedi (1983) | Avatar (2009) |
| 2 | Star Wars: Episode II - Attack of the Clones (2002) | Gravity (TV Series 2010-) |
| 3 | Star Wars: Episode V - The Empire Strikes Back (1980) | Blade Runner (1982) |
| 4 | Star Wars: Episode I - The Phantom Menace (1999) | War of the Worlds (2005) |
| 5 | Star Wars: The Clone Wars (2008) | King Kong (2005) |
| 6 | Star Wars: Episode IV - A New Hope (1977) | Star Wars: Episode II - Attack of the Clones (2002) |
| 7 | Krull (1983) | District 9 (2009) |
| 8 | Willow (1988) | Prometheus (2012) |
| 9 | Jumper (2008) | Serenity (2005) |

| Star Wars: Episode III - Revenge of the Sith (2005) | | |
|---|---|---|
| # | LDA | Normalized LDA |
| 10 | Eragon (2006) | The Lord of the Rings: The Fellowship of the Ring (2001) |

| Skyfall (2012) | | |
|---|---|---|
| # | LDA | Normalized LDA |
| 1 | Casino Royale (2006) | Casino Royale (2006) |
| 2 | Quantum of Solace (2008) | Mission: Impossible - Ghost Protocol (2011) |
| 3 | The World Is Not Enough (1999) | Batman Begins (2005) |
| 4 | Goldfinger (1964) | Mission: Impossible III (2006) |
| 5 | You Only Live Twice (1967) | Sherlock Holmes (2009) |
| 6 | Die Another Day (2002) | 300 (2006) |
| 7 | For Your Eyes Only (1981) | Quantum of Solace (2008) |
| 8 | Never Say Never Again (1983) | Tomorrow Never Dies (1997) |
| 9 | The Man with the Golden Gun (1974) | GoldenEye (1995) |
| 10 | Dr. No (1962) | On Her Majesty"s Secret Service (1969) |

| Quantum of Solace (2008) | | |
|---|---|---|
| # | LDA | Normalized LDA |
| 1 | Skyfall (2012) | Casino Royale (2006) |
| 2 | Casino Royale (2006) | On Her Majesty"s Secret Service (1969) |
| 3 | The World Is Not Enough (1999) | Tomorrow Never Dies (1997) |
| 4 | Die Another Day (2002) | Die Another Day (2002) |
| 5 | Goldfinger (1964) | Death Race (2008) |
| 6 | You Only Live Twice (1967) | The World Is Not Enough (1999) |
| 7 | For Your Eyes Only (1981) | Dr. No (1962) |
| 8 | The Man with the Golden Gun (1974) | GoldenEye (1995) |
| 9 | Never Say Never Again (1983) | 300 (2006) |
| 10 | A View to a Kill (1985) | Skyfall (2012) |

| GoldenEye (1995) | | |
|---|---|---|
| # | LDA | Normalized LDA |
| 1 | From Russia with Love (1963) | Quantum of Solace (2008) |
| 2 | Die Another Day (2002) | Live Free or Die Hard (2007) |
| 3 | The Man with the Golden Gun (1974) | On Her Majesty"s Secret Service (1969) |
| 4 | The Spy Who Loved Me (1977) | The World Is Not Enough (1999) |
| 5 | On Her Majesty"s Secret Service (1969) | Skyfall (2012) |
| 6 | Never Say Never Again (1983) | Tomorrow Never Dies (1997) |
| 7 | The World Is Not Enough (1999) | From Russia with Love (1963) |
| 8 | For Your Eyes Only (1981) | Casino Royale (2006) |
| 9 | Thunderball (1965) | Die Another Day (2002) |
| 10 | A View to a Kill (1985) | The Transporter (2002) |

| Inglourious Basterds (2009) | | |
|---|---|---|
| # | LDA | Normalized LDA |
| 1 | The Wild Bunch (1969) | Kill Bill: Vol. 1 (2003) |
| 2 | The Outlaw Josey Wales (1976) | Sin City (2005) |
| 3 | Kill Bill: Vol. 1 (2003) | No Country for Old Men (2007) |
| 4 | Dead Man"s Shoes (2004) | The Lord of the Rings: The Fellowship of the Ring (2001) |

(continued)

| Inglourious Basterds (2009) | | |
|---|---|---|
| # | LDA | Normalized LDA |
| 5 | Alexander (2004) | The Book of Eli (2010) |
| 6 | Gangster Squad (2013) | Django Unchained (2012) |
| 7 | Jackie Brown (1997) | The Last Samurai (2003) |
| 8 | Pulp Fiction (1994) | 300 (2006) |
| 9 | Killing Them Softly (2012) | King Kong (2005) |
| 10 | The Deer Hunter (1978) | 2012 (2009) |

**Table 2**

| LDA, 1 doc = 1 review | | | LDA, 1 doc = 1 movie | | | LDA, 1 doc = 1 movie normalized | | |
|---|---|---|---|---|---|---|---|---|
| enjoy | funny | bad | horror | child | action | action | best | comedy |
| great | great | action | scary | interesting | bad | bad | child | funny |
| original | love | fight | house | best | kill | kill | love | laugh |
| bad | comedy | kill | scare | mother | fight | fight | emotional | great |
| sequel | fun | pretty | bad | david | fun | great | mother | fun |
| action | enjoy | half | great | death | violence | shoot | father | love |
| didn | laugh | interesting | pretty | long | enjoy | gun | family | hilarious |
| fun | action | war | creepy | person | pretty | hero | great | best |
| sve | entertaining | bill | night | son | great | pretty | death | joke |
| far | best | fun | suspense | reality | hero | hard | long | star |
| horror | great | child | love | funny | best | action | funny | original |
| alien | superman | sve | best | laugh | drama | comic | comedy | great |
| scary | action | interesting | great | comedy | black | great | laugh | bad |
| scare | best | long | beautiful | joke | great | superman | great | sequel |
| house | tarantino | great | award | fun | drug | hero | best | action |
| dont | special | mother | dont | great | crime | villain | joke | special |
| pretty | lois | focus | long | hilarious | money | fight | love | monster |
| bad | excellent | far | wonderful | bad | american | best | hilarious | alien |
| suspense | clark | paul | heart | love | street | bad | fun | enjoy |
| doesnt | Washington | nature | american | christmas | law | superhero | old | dark |
| great | love | funny | love | comedy | comady | love | great | love |
| love | best | comedy | best | funny | funny | great | best | best |
| excellent | sex | laugh | great | laugh | laugh | torn | interesting | great |
| best | ring | great | classic | great | great | best | bad | dream |
| dont | long | joke | beautiful | best | fun | murder | far | american |
| star | father | team | old | bad | hilarious | thriller | star | beautiful |
| interesting | beautiful | bad | young | bullock | joke | mystery | enjoy | perfect |
| person | excellent | pretty | star | american | star | interesting | dialogue | family |
| ben | great | star | john | star | love | long | money | award |
| enjoy | jesus | enjoy | wonderful | murray | enjoy | hitchcock | pretty | wonderful |

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which can be substantially represented in computer readable media and so executed by a computer or processor, whether or not such computer or processor is explicitly shown.

The functions of the various elements shown in the figures can be provided through the use of dedicated hardware as well as hardware capable of executing software in association with appropriate software. When provided by a processor, the functions can be provided by a single dedicated processor, by a single shared processor, or by a plurality of individual processors, some of which can be shared. Moreover, explicit use of the term "processor" or "controller" should not be construed to refer exclusively to hardware capable of executing software, and can implicitly include, without limitation, digital signal processor ("DSP") hardware, read-only memory ("ROM") for storing software, random access memory ("RAM"), and non-volatile storage.

Other hardware, conventional and/or custom, can also be included. Similarly, any switches shown in the figures are conceptual only. Their function can be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as readily apparent by one of ordinary skill in this and related arts, for as many items listed.

These and other features and advantages of the present principles can be readily ascertained by one of ordinary skill in the pertinent art based on the teachings herein. It is to be understood that the teachings of the present principles can be implemented in various forms of hardware, software, firmware, special purpose processors, or combinations thereof.

Most preferably, the teachings of the present principles are implemented as a combination of hardware and software. Moreover, the software can be implemented as an application program tangibly embodied on a program storage unit. The application program can be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform can also include an operating system and microinstruction code. The various processes and functions described herein can be either part of the microinstruction code or part of the application program, or any combination thereof, which can be executed by a CPU. In addition, various other peripheral units can be connected to the computer platform such as an additional data storage unit and a printing unit.

It is to be further understood that, because some of the constituent system components and methods depicted in the accompanying drawings are preferably implemented in software, the actual connections between the system components or the process function blocks can differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications can be effected therein by one of ordinary skill in the pertinent art without departing from the scope of the present principles. All such changes and modifications are intended to be included within the scope of the present principles as set forth in the appended claims.

**Claims**

1.  A method, comprising:

    concatenating, in each of a plurality of respective documents, a plurality of text reviews of a plurality of media assets;
    reducing bias of each said document by weighting said documents according to the number of reviews comprising each said document;
    performing latent Dirichlet allocation on said weighted documents to extract profiles of said respective media assets; and
    creating recommendation lists of media assets, based on said extracted profiles.

2.  A method, comprising:

    aggregating in each of a plurality of respective documents, text reviews representative of the respective media assets;
    reducing bias of each said document by weighting said documents according to the number of reviews comprising each said document;
    performing latent Dirichlet allocation on said weighted documents to extract profiles of said respective media assets; and
    creating recommendation lists of media assets, based on said extracted profiles.

3.  The method of Claim 1, wherein concatenating comprises constraining a topic document distribution in said latent Dirichlet allocation to be equal for all text reviews of a particular media asset.

4.  The method of Claim 1, wherein creating recommendation lists is done using the Kullback-Leibler divergence measure.

5.  An apparatus, comprising:

    a first processor that concatenates in each of a plurality of respective documents, a plurality of text reviews of a plurality of media assets;
    multipliers that reduce bias of each said document by weighting said documents according to the number of reviews comprising each said document;
    a second processor to perform latent Dirichlet allocation on said weighted documents to extract profiles of said respective media assets; and
    a third processor that creates recommendation lists of media assets, based on said extracted profiles.

6.  An apparatus, comprising:

    a first processor that aggregates in each of a plurality of respective documents, text reviews representative of the respective media assets;
    multipliers that reduce bias of each said document by weighting said documents according to the number of reviews comprising each said document;
    a second processor to perform latent Dirichlet allocation on said weighted documents to extract profiles of said respective media assets; and
    a third processor that creates recommendation lists of media assets, based on said extracted profiles.

7.  The apparatus of Claim 5, wherein concatenating is performed by constraining a topic document distribution in said latent Dirichlet allocation to be equal for all text reviews of a particular media asset.

**8.** The apparatus of Claim 5, wherein said third processor creates recommendation lists is done using the Kullback-Leibler divergence measure.

**9.** Computer program comprising program code instructions executable by a processor for implementing the steps of a method according to at least one of claims 1 to 4.

**10.** Computer program product which is stored on a non-transitory computer readable medium and comprises program code instructions executable by a processor for implementing the steps of a method according to at least one of claims 1 to 4.

**100**

Start — 101

Concatenate text reviews — 110

Reduce bias by weighting — 120

Perform LDA — 130

Create recommendation lists — 140

**Figure 1**

<u>200</u>

Text reviews

Processor A          210

Weight based on
number of
text reviews

220

Weighted
Documents

Processor B          230

Profiles

Processor C          240

Recommendation
Lists

**Figure 2**

Europäisches
Patentamt

European
Patent Office

Office européen
des brevets

# EUROPEAN SEARCH REPORT

Application Number

EP 15 30 5829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Suvir Bhargav: "Efficient Features for Movie Recommendation Systems", , 1 October 2014 (2014-10-01), pages 1-53, XP055235469, Retrieved from the Internet: URL:http://kth.diva-portal.org/smash/get/diva2:759691/FULLTEXT01.pdf [retrieved on 2015-12-10] * abstract * * page 9, line 8 - page 10, line 4 * * page 11, line 1 - page 12, line 11 * * page 15, line 33 - page 16, line 11 * * page 19, line 3 - page 20, line 8 * * page 22, line 1 - line 30 * * figures 3.1, 4.1 * ----- | 1-10 | INV. G06F17/30 |
| A | DAVID M BLEI ET AL: "Latent Dirichlet Allocation", JOURNAL OF MACHINE LEARNING RESEARCH, vol. 3, 1 January 2003 (2003-01-01), pages 993-1022, XP055098158, * abstract * * Section 3 * ----- | 1-10 | TECHNICAL FIELDS SEARCHED (IPC) G06F |
| A | NIKLAS JAKOB ET AL: "Beyond the Stars: Exploiting Free-Text User Reviews to Improve the Accuracy of Movie Recommendations", PROCEEDINGS OF THE 1ST INTERNATIONAL CIKM WORKSHOP ON TOPIC-SENTIMENT ANALYSIS FOR MASS OPINION, 6 November 2009 (2009-11-06), XP055235476, * abstract * * Section 4.1 * * Section 5.1.3 * * Section 5.2 * ----- | 1-10 | |

-/--

The present search report has been drawn up for all claims

| Place of search | Date of completion of the search | Examiner |
|---|---|---|
| Berlin | 10 December 2015 | Pose Rodríguez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .............................................................................

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 15 30 5829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | Christophe Dupuy ET AL: "Content Profiling from Text Reviews", , 10 December 2015 (2015-12-10), XP055235594, Retrieved from the Internet: URL:http://www.di.ens.fr/~cdupuy/Projects/ Content_profiling/2014_DUPUY_contents.pdf [retrieved on 2015-12-10] * No publication date of the document can be obtained but it is considered to be a document which is highly relevant to the invention (see D2: abstract; Section 3.1, 3.2 and 3.3 which also disclose a movie recommendation system based on the topics extracted from the user's reviews using LDA) * ----- | 1-10 | |
| | | | TECHNICAL FIELDS SEARCHED (IPC) |

The present search report has been drawn up for all claims

| Place of search | Date of completion of the search | Examiner |
|---|---|---|
| Berlin | 10 December 2015 | Pose Rodríguez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)